# EUROPEAN PATENT SPECIFICATION

(11) **EP 0 284 325 B1**
(45) Date of publication and mention of the grant of the patent: **03.11.1993**
(21) Application number: 88302447.3
(22) Date of filing: 21.03.1988
(51) Int. Cl.: H04M 1/72

(54) **Radio telephone**
Funkfernsprechgerät
Radiotéléphone

(30) Priority: 24.03.1987 JP 67813/87
(43) Date of publication of application: 28.09.1988
(73) Proprietor: KABUSHIKI KAISHA TOSHIBA, Kawasaki-shi, Kanagawa-ken 210 (JP)
(72) Inventor: Ito, Koichi c/o Patent Division, Minato-ku Tokyo (JP)
(74) Representative: BATCHELLOR, KIRK & CO.

(56) References cited:
- EP-A- 0 119 602
- EP-A- 0 196 834
- WO-A-87/00718
- US-A- 3 124 657
- US-A- 4 706 274

## Description

This invention relates to the field of radio telephones, typically cordless telephones and, more particularly, to means for increasing the sound volume in certain circumstances.

Radio telephones are comprised of a radio telephone set and a base unit. The radio telephone set has a handset, and the base unit is connected to wired telephone lines for exchanging speech signals between the wired telephone lines and the radio telephone set through a radio channel. The base unit and the radio telephone set each have a transmitter and a receiver. Such a radio telephone apparatus is for example known in EP-A-0 119 602.

When a call signal appears at a wired telephone line, the base unit transmits a paging signal to the radio telephone set through a predetermined control channel to set up a speech channel. The paging signal includes a channel signal to indicate one of a number of speech channels. In response, the radio telephone set sends out a paging response signal through the control channel. The base unit detects the intensity of the received paging response signal sent from the radio telephone set, i.e. the intensity of the paging response signal on the control channel. Then, the base unit stops the transmission of the paging signal when the detected intensity exceeds a predetermined level, and switches the radio channel between the base unit and the radio telephone set from the control channel to the speech channel indicated in the paging signal. The radio telephone set also switches the radio channel from the paging channel to the speech channel set by the received paging signal. Thereafter, the base unit transmits a bell ringing signal to the radio telephone set via the speech channel. After transmitting the ringing signal, the base unit establishes a speech path between the wired telephone line and the radio telephone set when it receives an "off-hook" signal from the radio telephone set.

When the base unit receives a call origination signal (an "off-hook" signal) from the radio telephone set through the control channel while it is in a waiting state, it detects the request from the radio telephone set to originate a call and transmits a response signal which includes a channel signal indicating one of a plurality of speech channels. The base unit then establishes a speech path between the wired telephone line and itself, and switches the radio channel from the control channel to the speech channel in response to the response signal. After receiving the response signal, the radio telephone set also switches the radio channel from the control channel to the speech channel in response to the received response signal.

If, in this state, the radio telephone set transmits dialling signals to the base unit through the speech channel by a dialling operation, the dialling signal is transmitted to the wired telephone line via the base unit.

Thus, the radio telephone apparatus carries out the operations of receiving incoming telephone calls from the wired telephone line and originating calls from the radio telephone set.

However, known radio telephones have a serious drawback. Sufficiently large loudspeakers cannot be used in the apparatus, because it is necessary for the radio telephone set to be compact and light. If a loudspeaker with a large enough speaker were used, it would be extremely difficult to drive the loudspeaker to generate speech signals, because the capacity of the power source of the radio telephone set is insufficient. Generally, the power source is a small storage battery used to drive the components of the radio telephone set. These components typically have low power requirements. Loudspeakers typically have high power requirements.

The main object of the present invention is therefore to provide a radio telephone apparatus which is capable of producing speech signals from a loudspeaker.

Accordingly the present invention provides a radio telephone apparatus comprising a base unit coupled to a wired telephone line and a radio telephone handset including a battery, the handset being connected to the base unit through a radio channel, and including speaker means for selectively generating a speech signal from the wired telephone line, the base unit also including loudspeaker means for selectively generating a speech signal from the wired telephone line, the apparatus being characterised by:
(a) determining means for determining if the handset is installed in the base unit; and
(b) control means responsive to the determining means for enabling the base unit loudspeaker means and disabling the handset speaker means if the handset is installed in the base unit and enabling the handset speaker means and disabling the base unit loudspeaker means if the handset is not installed in the base unit.

The invention also extends to a radio telephone apparatus comprising a base unit coupled to a wired telephone line and a portable handset including a battery, the portable handset being connected to the base unit through a radio channel, and also including a microphone and speaker means for selectively generating a speech signal from the wired telephone line, and in that the base unit further includes loudspeaker means for selectively generating a speech signal from the wired telephone line, characterised by:
(a) first determining means for determining if the handset is installed in the base unit;
(b) second determining means, responsive to an output signal from the first determining means and key data from a predetermined control key, for determining a first loudspeaker mode and a second loudspeaker mode, the first loudspeaker mode involving the loudspeaker means alone and the second loudspeaker mode involving the loudspeaker means and also the microphone of the handset; and
(c) control means responsive to the first and second determining means for connecting the loudspeaker means to the wired telephone line if the first loudspeaker mode is determined and connecting said loudspeaker means and said microphone to the wired telephone line if the second loudspeaker mode is determined.

Figure 1 is a block diagram of a radio telephone system embodying the present invention;
Figure 2 is an external view of the radio telephone apparatus of Figure 1;
Figure 3 is a flow chart of the operation of the radio telephone apparatus of Figure 1;
Figure 4 is a block diagram of a modification of the Figure 1 apparatus;
Figure 5 is a flow chart of the operation of the Figure 4 apparatus;
Figure 6 is a block diagram of a further modification of the apparatus of Figure 1;
Figure 7 is an external view of the radio telephone apparatus of Figure 6; and
Figures 8 to 10 are flow charts of the operation of the radio telephone apparatus of Figure 6.

### Introductory Summary

The radio telephone apparatus has a base unit and a radio telephone set, the base unit being coupled to a wired telephone line and connected to the radio telephone set through a radio channel. The base unit operates by DC power converted from an AC source, while the radio telephone set is powered by a small storage battery, which may be charged by the DC power when the set is installed in or on the base unit. The radio telephone set also includes call origination keys, dialing keys, and a microphone and speaker. The base unit includes a loudspeaker for generating sound signals from said wired telephone line and a control circuit. The control circuit selects a loudspeaker mode in response to the call origination signal by the operation of the call origination key if the radio telephone set is installed in the base unit. The control circuit connects the loudspeaker to the wired telephone line if the loudspeaker mode is selected, so that the sound signals may be heard through the loudspeaker.

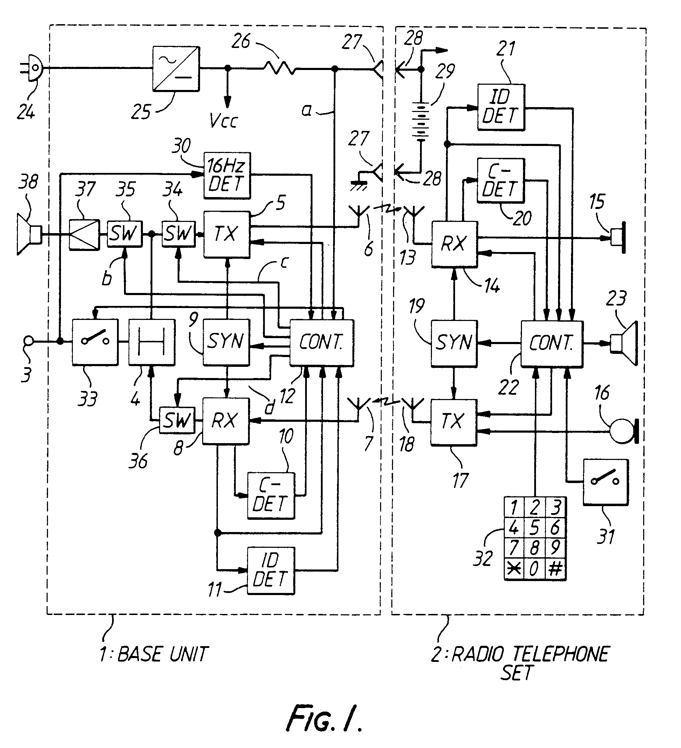

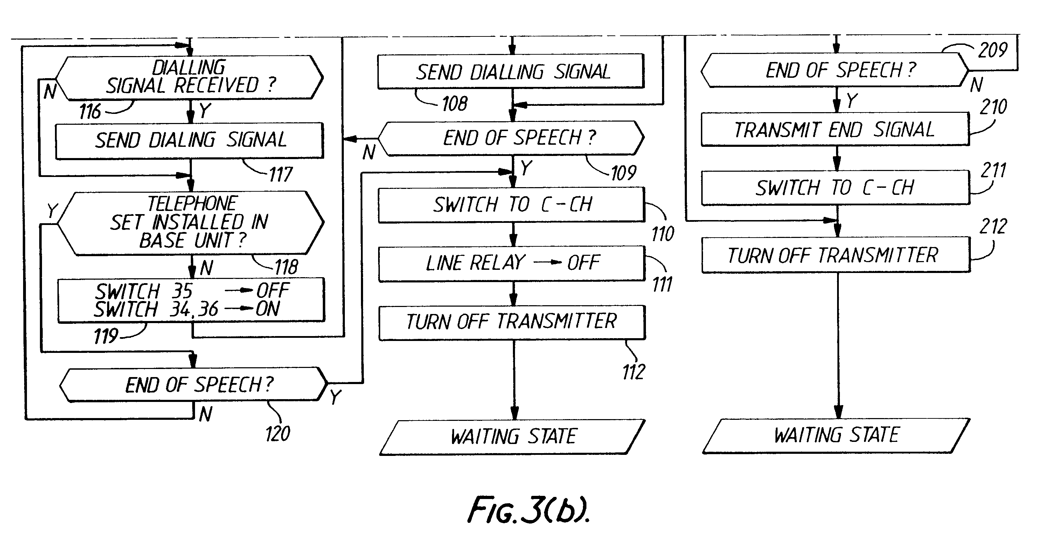

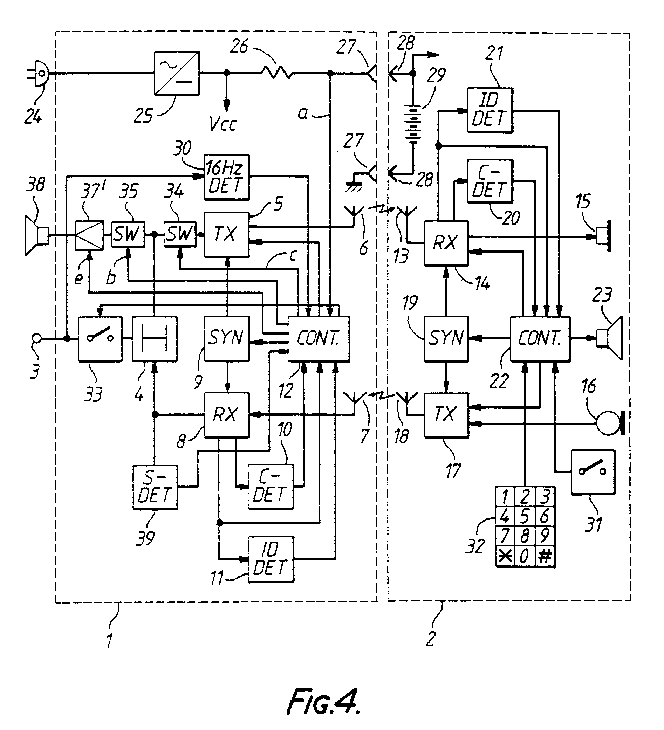

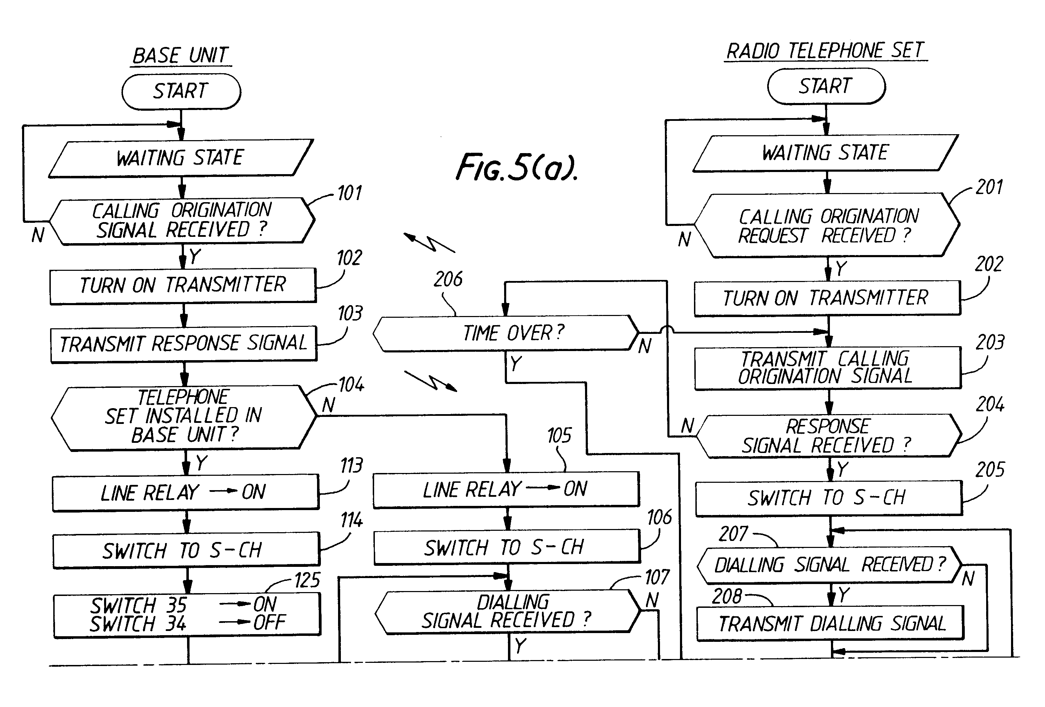

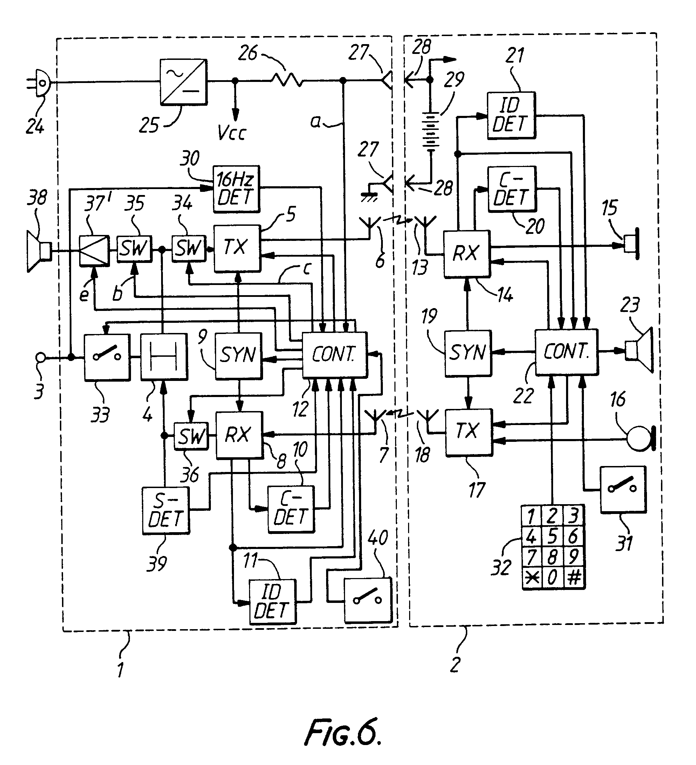

In a brief and simplified form, the various circuits described operate as follows.
a) The circuit of Figure 1 has two modes, the normal mode and the loudspeaker-only mode; the wired telephone line is connected (via a hybrid circuit, in all cases) to the transmitter and receiver of the base unit in the normal mode, and to the loudspeaker (alone) in the loudspeaker-only mode.
b) In the modified circuit of Figure 4, the loudspeaker mode is a loudspeaker-and-microphone mode, in which the wired telephone line is also connected to the receiver in the base unit, and the connection from the wired telephone line to the loudspeaker is via a variable gain amplifier the gain of which is reduced if the microphone signal (as measured at the output of the receiver in the base unit) exceeds a predetermined level.
c) In the further modified circuit of Fig. 6, there are two submodes to the loudspeaker mode, the loudspeaker-only mode or the loudspeaker-and-microphone mode, selected by a control switch on the base unit.
The loudspeaker mode is selected if the radio telephone set is adjacent to the base unit; this condition may be determined by monitoring a charging current from the base unit for the battery of the radio telephone set when the latter is installed in the base unit, or a switch operated by the radio telephone set being located in the base unit. The base unit continuously monitors the location of the base unit (and the state of the control switch, if present), and selects the mode accordingly.

### Detailed Description

### Figures 1 and 2

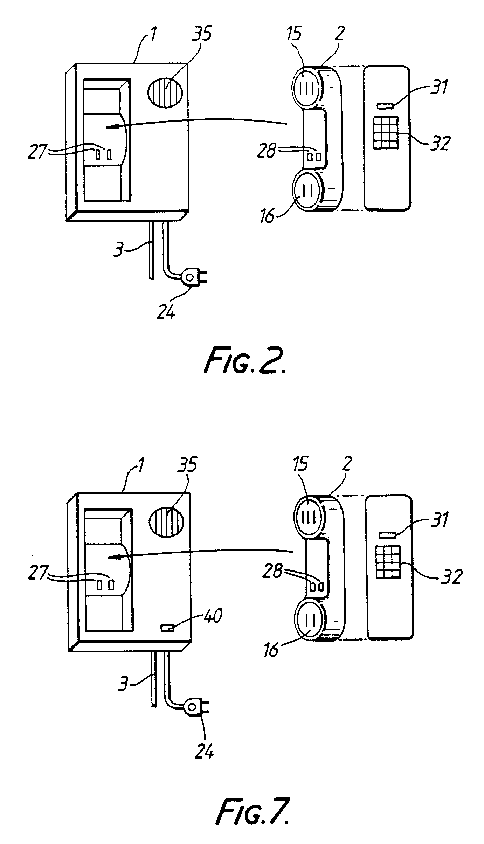

Referring to Figure 1, the radio telephone apparatus comprises a base unit 1 coupled to a radio telephone set 2 through one of a plurality of radio channels including a control channel (C-CH) and a plurality of speech channels (S-CHs), and also connected to a wired telephone line 3. Base unit 1 includes an AC/DC converter 25 and AC plug 24, in order to produce a DC voltage (Vcc) from a commercial AC power source. The DC voltage is supplied to electrical components of base unit 1. Radio telephone set 2 includes a small rechargeable storage battery 29 which supplies a DC voltage to electrical components of the radio telephone set 2. The terminals of battery 29 are connected to charging terminals 28. When radio telephone set 2 is installed in base unit 1, as shown in Figure 2, the terminals 28 are connected to supply terminals 27 of base unit 1, one of which is connected to the AC/DC converter 25 through a resistor 26 and the other of which is connected to ground. Thus the converted DC voltage is supplied to battery 29 through resistor 26 and terminals 27 and 28. Resistor 26 is a current limiting resistor to limit the current supplied to terminals 27.

A signal sent from wired telephone line 3 is applied to hybrid circuit 4 via line relay 33 when that relay is closed (ON state). Hybrid circuit 4 sends the applied signal to switches 34 and 35. These switches are always in opposite states, so the signal from hybrid circuit 4 is supplied either to transmitter 5 (when switch 34 is closed) or to a loudspeaker 38 via an amplifier 37 (when switch 35 is closed). Transmitter 5 modulates a carrier wave with the signal fed to it and transmits the modulated signal to radio telephone set 2 via a transmitting antenna 6. The carrier wave is supplied from a synthesizer 9 and has a frequency corresponding to a radio channel selected, in a known manner, by synthesizer 9.

The signal transmitted from radio telephone set 2 is received by receiving antenna 7 and demodulated by receiver 8 using the carrier wave supplied by synthesizer 9. The demodulated signal is sent to hybrid circuit 4 when switch 36 is closed and then sent to wired telephone line 3 when line relay 33 is closed. The demodulated signal is also supplied to received field detector 10 and identification signal detector 11. Detector 10 is a carrier squelch circuit or a noise squelch circuit, and detects the intensity of the received field, while detector 11 determines whether the identification signal contained in the demodulated signal corresponds to a specific identification signal allotted to radio telephone set 2. The detected signals from detectors 10 and 11 are supplied to control circuit 12. The demdulated signal from receiver 8 is also supplied to control circuit 12 to decode a control signal contained in the demodulated signal to establish a speech path.

The call signal detector 30 detects a call signal (16 Hz signal) sent from wired telephone line 3, and informs control circuit 12 when the call signal has been received.

Control circuit 12 includes a microcomputer, a RAM for storing operation data and ROM containing a stored operation program. Control circuit 12 controls transmitter 5, synthesizer 9, line relay 33, switches 34, 35 and 36 (to establish a speech path in response to the output signals of receiver 8), and detectors 10, 11 and 30. Comntrol circuit 12 is also connected to the junction between resistor 26 and the upper of terminals 27, and detects the voltage ***a*** at this point. This voltage ***a*** drops when radio telephone set 2 is installed in base unit 1 because a charging current is supplied to battery 29 through terminals 27 and 28. Control circuit 12 determines whether or not radio telephone set 2 is installed in base unit 1 depending on whether the voltage a is above or below a predetermined value.

In radio telephone set 2, a signal transmitted from base unit 1 is received by receiving antenna 13, demodulated by receiver 14 and then applied to speaker 15. In the same manner as in base unit 1, the signal demodulated by receiver 14 is supplied to received signal detector 20, identification signal detector 21 and control circuit 22. A voice signal applied to microphone 16 is passed to transmitter 17 as a modulation input and then transmitted to base unit 1 through transmitting antenna 18. Control circuit 22 includes a microcomputer, a RAM for storing operation data and ROM containing a stored operation program. Control circuit 22 controls receiver 14, transmitter 17 and synthesizer 19 (to establish a speech path in response to the output signals of receiver 14), and detectors 20 and 21. Control circuit 22 also causes speaker 23 to produce a ringing sound when it detects a ringing signal in the demodulated signal from receiver 14. Speakers 15 and 23 and microphone 16 are of designs which consume very little power. Control circuit 22 controls the call origination operation in response to key data from calling origination key 31 and dialing keys 32. Keys 31 and 32 are arranged on the top surface of radio telephone set 2, as shown in Figure 2, so that they can be operated when radio telephone set 2 is installed in base unit 1. Key 31 is a slide type key and keys 32 are push-type keys.

### Figure 3

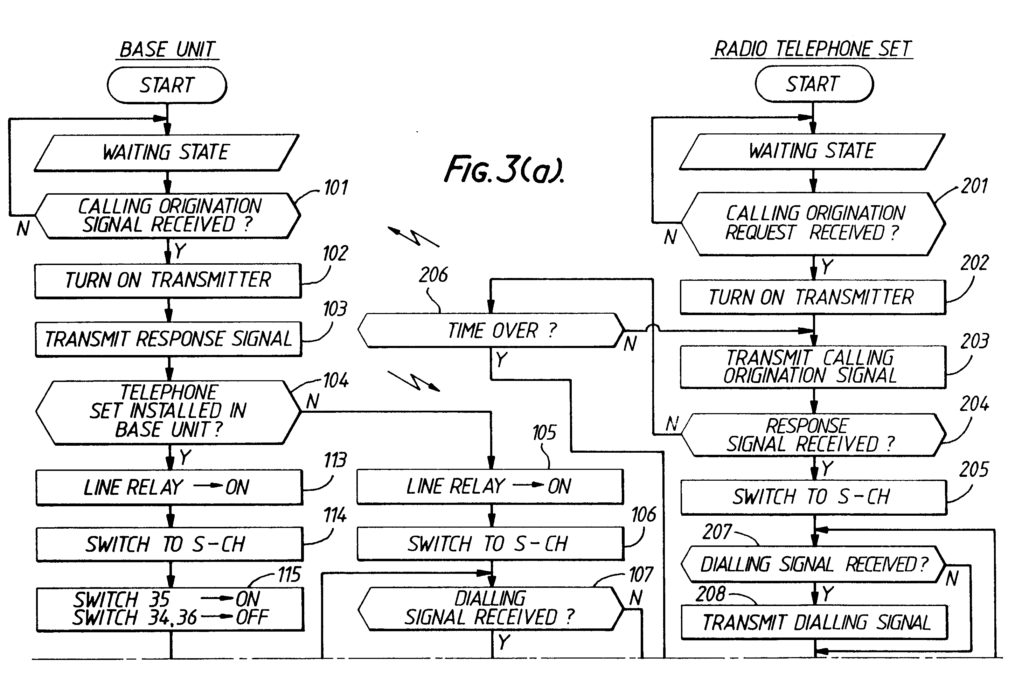

Figure 3 shows the operation of this apparatus.

In a waiting state, control circuit 12 causes transmitter 5 to turn off and control circuit 22 causes transmitter 17 to turn off, in order to prevent unnecessary transmission of radio signals. Receiver 14 is also normally off, but control circuit 22 periodically turns it on briefly; this minimizes the power consumption of the receiver when it is in the waiting state. Also, in the waiting state, switches 34 and 36 are in the ON state (closed) and switch 35 is in the OFF state (opened).

When call origination key 31 is slid to be in the ON state, the key data is supplied to control circuit 22, which recognizes this as a request to originate a call, step 201, and turns transmitter 17 on, step 202. Control circuit 22 then sends a call origination signal to transmitter 17, which modulates and transmits this signal, step 203. In this state, synthesizer 19 supplies transmitter 17 with a carrier wave corresponding to a control channel. After transmitting the call origination signal, control circuit 22 causes receiver 14 to turn on and remain in the ON state.

The transmitted call origination signal is received and demodulated by receiver 8, which feeds the demodulated signal to control circuit 12. When control circuit 12 recognizes the demodulated signal as a call origination signal, step 101, it turns transmitter 5 on, step 102, and then sequentially switches the receiving channel through the speech channels to find a vacant speech channel. If control circuit 12 finds a vacant speech channel, it sends a response signal to transmitter 5 to modulate and transmit a response signal through the control channel, step 103, including a speech channel signal indicating the vacant speech channel and a predetermined identification signal. Control circuit 12 then monitors the level of voltage ***a***,, step 104, to determine whether radio telephone set 2 is installed in base unit 1. If not, control circuit 12 selects the normal mode of operation and sends control signals to line relay 33 to connect wired telephone line 3 to hybrid circuit 4, step 105, and to synthesizer 9 to switch the control channel to the selected speech channel, step 106.

When receiver 14 receives the transmitted response signal, it demodulates the signal and sends the demodulated signal to control circuit 22. When control circuit 22 recognizes this as the response signal, step 204, it sends a control signal to synthesizer 9 to switch the control channel to the speech channel in accordance with the speech channel portion of the response signal, step 205. For this, control circuit 22 compares the identification signal in the response signal with the identification data stored therein. If the identification signal does not correspond to the predetermined identification data, the demodulated signal is not responded to. If the response signal is not received for a predetermined period, step 206, control circuit 22 annuls the received request for call origination and causes the transmitter 17 to turn off, step 212. Control circuit 22 also causes receiver 14 to turn off and on periodically. Therefore, radio telephone set 2 is placed in the waiting state again.

When the speech channel between base unit 1 and radio telephone set 2 is established, a dial tone from wired telephone line 3 is transmitted to radio telephone set 2 and is emitted by speaker 15. The dialling keys 32 are depressed to transmit a dialling signal to base unit 1 after the dial tone is heard through speaker 15. Control circuit 22 receives the dialling key data from dialling keys 32 and passes the data to transmitter 17, steps 207 and 208. Transmitter 17 modulates and transmits the dialling signal through the speech channel. When the dialling signal is received by receiver 8, it is demodulated and passed to control circuit 12, which then sends a dialling signal, such as a DTMF (dual tone multi-frequency) signal or a DP (dial pulse) signal, to wired telephone line 3, in response to the received dialling signal, steps 107 and 108. Thus, the call origination operation is carried out and the radio telephone apparatus is placed in a communication state.

When, at the end of the call, the call origination key 31 is slid back to its initial position, control circuit 22 detects that as the end of speech and sends an end signal to transmitter 17 to be transmitted to base unit 1, steps 209 and 210. Control circuit 22 then sends a control signal to synthesizer 19 to switch the speech channel to the control channel, step 211, and turns transmitter 17 off, step 212. Control circuit 12 also causes receiver 14 to turn on and off periodically. Thus radio telephone set 2 is in the waiting state again.

When the end signal is received by receiver 8, it is demodulated and sent to control circuit 12, which sends a control signal to synthesizer 9 to switch the speech channel to the control channel, steps 109 and 110. Control circuit 12 then sends control signals to line relay 33 and transmitter 5 to disconnect wired telephone line 3 from hybrid circuit 4 and turn off transmitter 5, steps 111 and 112. Thus base unit 1 is also in the waiting state again.

If control circuit 12 finds that the radio telephone set 2 is installed in the base unit 1 at step 104, it selects the loudspeaker mode and sends a control signal to line relay 33 to connect wired telephone line 3 to hybrid circuit 4, step 113. Control circuit 12 also sends a control signal to synthesizer 9 to switch the control channel to the vacant speech channel, step 114. Control circuit 12 then sends control signals ***b***, ***c*** and ***d*** to switches 34, 35 and 36 to connect hybrid circuit 4 to amplifier 37 and disconnect hybrid circuit 4 from transmitter 5 and receiver 8, step 115. This places the radio telephone apparatus in the receiving loudspeaker mode, using loudspeaker 38. In this mode, since the dial tone from wired telephone line 3 is supplied to loudspeaker 38 through line relay 33, hybrid circuit 4, switch 35 and amplifier 37, the dial tone is emitted by loudspeaker 38. Thereafter, control circuit 12 passes the dialling signal received from the radio telephone set 2 to wired telephone line 3, steps 116 and 117.

After the call origination operation has been carried out, a ringing signal from wired telephone line 3 is emitted by loudspeaker 38 if the called telephone set is not busy. If the called party responds to this call, the responding voice signal from the called telephone set is emitted by loudspeaker 38. If the called telephone set is busy, a busy tone from wired telephone line 3 is emitted by loudspeaker 38. This receiving loudspeaker mode, using loudspeaker 38, is continued as long as radio telephone set 2 is installed in base unit 1, step 118. In this state, when the end signal is received from radio telephone set 2, step 120, control circuit 12 carries out the end of speech operation as described above, steps 110, 111 and 112.

If the user picks up radio telephone set 2 after hearing the ringing signal or the response voice signal from loudspeaker 38, control circuit 12 detects that the radio telephone set 2 is no longer installed in base unit 1 from the level of voltage ***a***, step 118. Control circuit 12 then sends control signals ***b***, ***c***, and ***d*** to switches 34, 35 and 36, in order to connect hybrid circuit 4 to transmitter 5 and receiver 8 and disconnect it from amplifier 37. Therefore, the radio telephone apparatus is placed in the normal mode, and uses speaker 15 and microphone 16, instead of the receiving loudspeaker mode.

### Figures 4 and 5

Figure 4 shows a modified circuit, in which the amplifier 37 is replaced by a variable gain amplifier 37' the gain of which is selectable at two levels; a signal level detector 39 is also provided, and switch 36 is omitted. Signal level detector 39 is fed with the output signal from receiver 8 and determines whether it is above a predetermined level. If it is, detector 39 sends a signal to control circuit 12, which sends a control signal ***e*** to amplifier 37' to reduce its gain. Since the gain of amplifier 37' is reduced when the magnitude of the output signal from receiver 8 is increased, the magnitude of the signal emitted by loudspeaker 38 is reduced, and is therefore too low to have any significant effect if it enters microphone 16. With this modified circuit, the apparatus is able to carry out loudspeaker communication using loudspeaker 38 and microphone 16, instead of only loudspeaker 38.

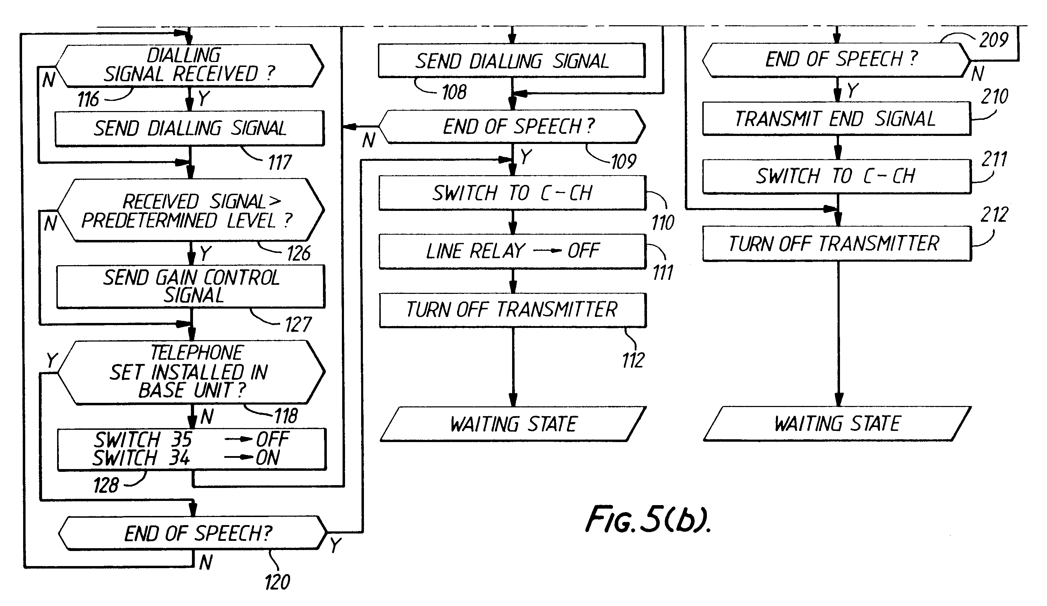

Figure 5 shows the operation of this modified circuit. After transmitting the response signal to radio telephone set 2 in response to the calling origination signal, step 103, control circuit 12 determines whether radio telephone set 2 is installed in base unit 1, step 104. If it is, control circuit 12 selects the loudspeaker communication mode and causes line relay 33 to connect hybrid circuit 4 to wired telephone line 3, step 113. Control circuit 12 then sends the control signal to synthesizer 9 to switch the control channel to the speech channel, step 114, and control signals ***b*** and ***c*** to switches 34 and 35 to connect hybrid circuit 4 to amplifier 37' and disconnect it from transmitter 5, step 125. Therefore, the radio telephone apparatus is in the loudspeaker communication mode, using loudspeaker 38 and microphone 16. In this mode, the dial tone from wired telephone line 3 is emitted by loudspeaker 38 until control circuit 12 sends the dialing signal to wired telephone line 3. After the speech path between the called telephone set and base unit 1 is established by the dialling signal, steps 116 and 117, control circuit 12 monitors the output of detector 39. If control circuit 12 finds that there is an output from detector 39, step 126, it sends the control signal ***e*** to amplifier 37' to reduce the gain, step 127. If the output from detector 39 ends, step 126, control circuit 12 stops sending the control signal ***e*** to amplifier 37' to return it to the initial high gain.

This loudspeaker communication mode is continued as long as radio telephone set 2 is installed in base unit 1, step 118. In this state, when the end signal is received from radio telephone set 2, step 120, control circuit 12 carries out the end operation as described before, steps 110, 111 and 112.

If the user picks up radio telephone set 2 in this loudspeaker communication mode, control circuit 12 sends control signals ***b*** and ***c*** to switches 34 and 35, in order to connect hybrid circuit 4 to transmitter 5 and disconnect it from amplifier 37', step 128. Thus the radio telephone apparatus is returned to the normal mode with speaker 215 and microphone 16 from the loudspeaker communication mode.

### Figures 6 to 9

Figure 6 shows an additional modification of the circuit, in which a loudspeaker switch 40 is arranged on the top surface of base unit 1 as shown in Figure 7.

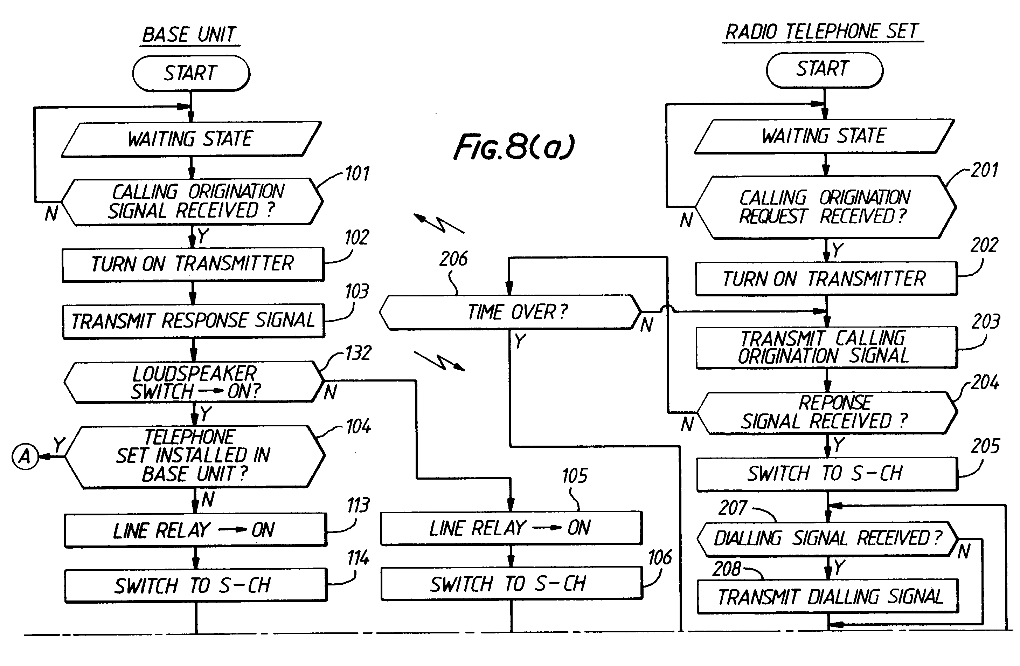

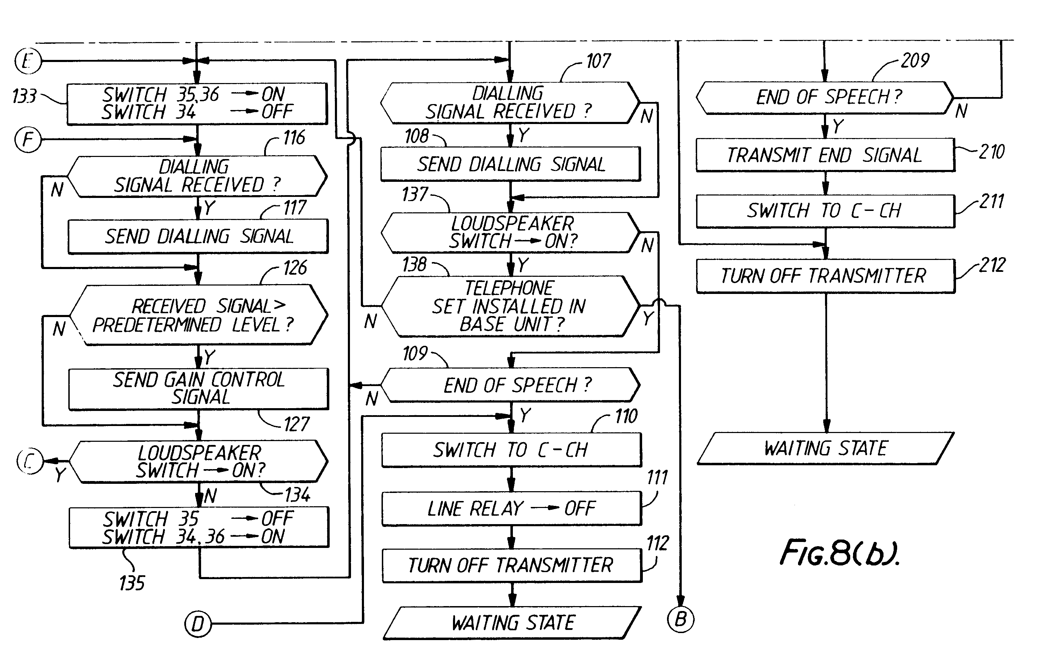

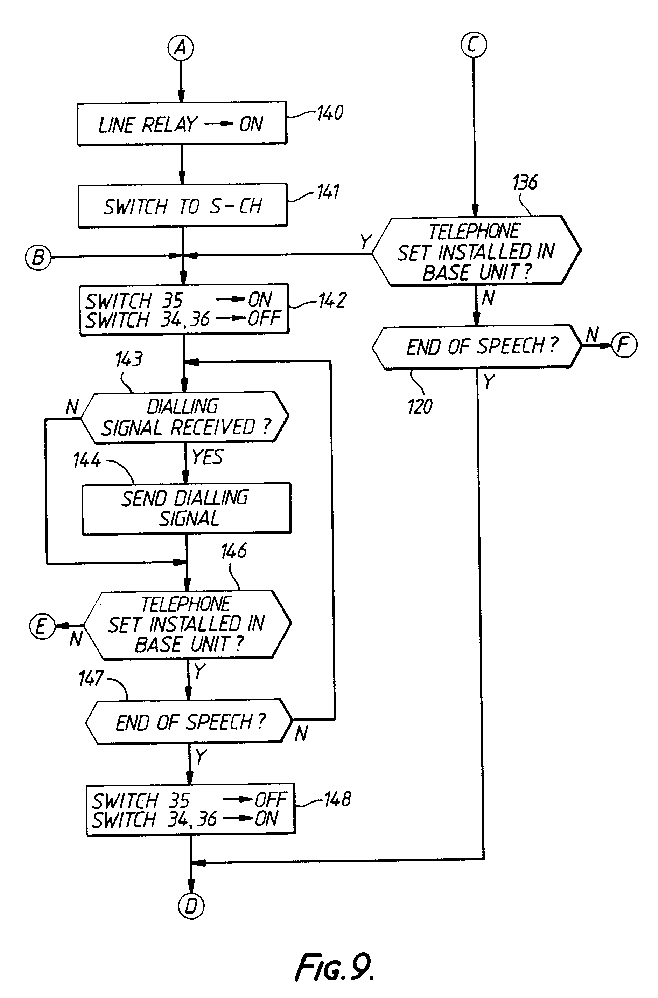

Figures 8 and 9 show the operation of this further modified circuit. After transmitting the response signal to radio telephone set 2 in response to the calling origination signal, step 103, control circuit 12 determines whether loudspeaker switch 40 is depressed, step 132. If so, control circuit 12 further determines whether radio telephone set 2 is installed in base unit 1, step 104. If not, control circuit 12 sends control signals ***b***, ***c***, and ***d*** to switches 34, 35, and 36, in order to connect hybrid circuit 4 to receiver 8 and amplifier 37' and disconnect it from transmitter 5, step 133. Therefore, loudspeaker communication is carried out with loudspeaker 38 and microphone 16 after the speech path between the called telephone set and base unit 1 is established. Thereafter, when loudspeaker switch 40 is depressed and is in the OFF state, step 134, control circuit 12 sends control signals ***b***, ***c***, and ***d*** to switches 34, 35, and 36, in order to disconnect hybrid circuit 4 from amplifier 37' and connect it to transmitter 5 and receiver 8, step 135. Therefore, the radio telephone apparatus is placed in the normal mode with speaker 15 and microphone 16.

If control circuit 12 finds that radio telephone set 2 is installed in base unit 1 in step 104, it causes line relay 33 to connect wired telephone line 3 to hybrid circuit 4 and synthesizer 9 to switch the control channel to the speech channel, steps 140 and 141. Control circuit 12 sends control signals ***b***, ***c***, and ***d*** to switches 34, 35, and 36, in order to connect hybrid circuit 4 to amplifier 37' and disconnect it from transmitter 5 and receiver 8, step 142. Thus, the receiving loudspeaker operation is carried out. In this state, control circuit 12 always causes amplifier 37' to select the higher gain by control signal ***e***.. When control circuit 12 finds that radio telephone set 2 is not installed in base unit 1 in the receiving loudspeaker operation, step 146, control circuit 12 sends control signals ***b***, ***c***, and ***d*** to switches 34, 35, and 36, in order to disconnect hybrid circuit 4 from transmitter 5 and connect it to receiver 8 and amplifier 38, step 133. The radio telephone apparatus is thus placed in the loudspeaker communication mode with loudspeaker 38 and microphone 16. When control circuit 12 also receives the end signal from radio telephone set 2 in the receiving loudspeaker operation, step 147, it sends control signals ***b***, ***c***, and ***d*** to the switches 34, 35, and 36, in order to disconnect hybrid circuit 4 from amplifier 37' and connect it to transmitter 5 and receiver 8, step 148. Thereafter, control circuit 12 carries out the end operation as described above, steps 110, 111, and 112.

In this further modified circuit, when loudspeaker switch 40 is in the ON state and radio telephone set 2 is installed in base unit 1, in the normal mode, steps 137 and 138, the radio telephone apparatus is placed in the receiving loudspeaker mode. Also, when loudspeaker switch 40 is in the ON state and radio telephone set 2 is not installed in base unit 1, in the normal mode, steps 137 and 138, the radio telephone apparatus is placed in the loudspeaker communication mode. Furthermore, when radio telephone set 2 is installed in base unit 1, in the loudspeaker communication mode, step 136, the radio telephone apparatus is placed in the receiving loudspeaker mode.

### Figure 10

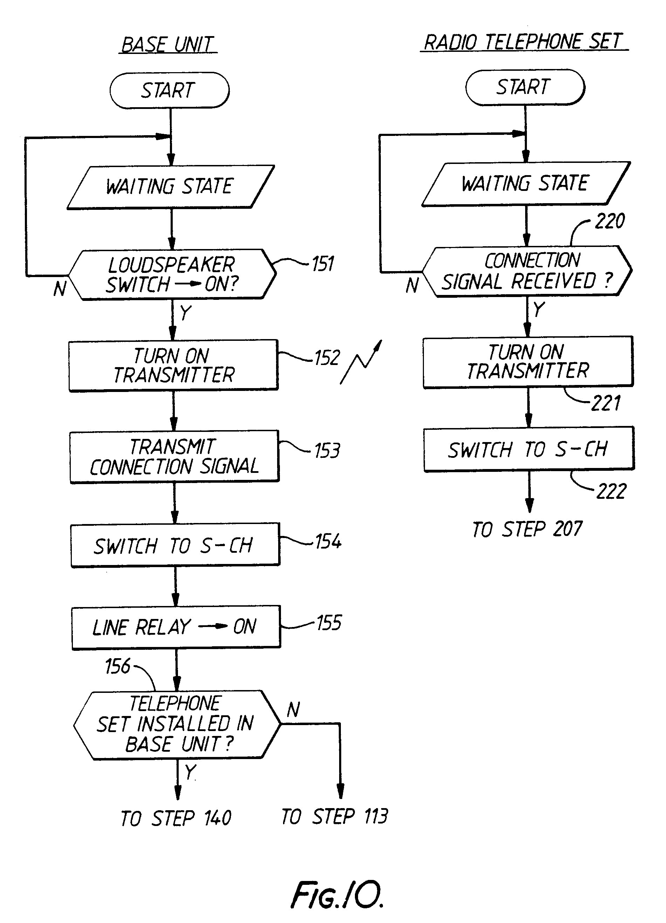

Figure 10 shows a modified mode of operation of this further modified circuit, in which the apparatus is able to operate the calling origination in response to the depression of loudspeaker switch 40, instead of the operation of the calling origination key 31.

When control circuit 12 finds that loudspeaker switch 40 is in the ON state by being depressed while the system is in the waiting state, step 151, it sends a connection signal to transmitter 5 after turning it on, steps 152 and 153. Transmitter 5 transmits the connection signal to radio telephone set 2 through the control channel. The connection signal includes the speech channel signal indicating the selected vacant speech channel and the predetermined identification signal.

Control circuit 12 then sends control signals to synthesizer 9 and line relay 33 to select the chosen speech channel and connect hybrid circuit 4 to wired telephone line 3, steps 154 and 155. Thereafter, control circuit 12 determines whether radio telephone set 2 is installed in base unit 1, step 156. If so, the radio telephone apparatus is placed in the receiving loudspeaker mode, and if not, it is placed in the loudspeaker communication mode, as described above.

On the other hand, when control circuit 22 detects that the connection signal is received, step 220, it sends the control signal to synthesizer 19 to select the indicated speech channel after transmitter 17 is turned on, steps 221 and 222. Thus, the speech path between base unit 1 and radio telephone set 2 is established.

### General Remarks

In the circuits described, the end operation is carried out by the operation of key 31. However, base unit 1 may carry out the end operation in response to detecting that the called telephone set is disconnected from wired telephone line.

Also, in the circuits described, signal level detector 39 determines whether the output signal level from receiver 8 is beyond a single predetermined level and amplifier 37' selects one of two gains by the control signal ***e*** from control circuit 12. However, detector 39 may compare the output signal level with a plurality of predetermined levels and amplifier 37' may select one of a plurality of gains according to the signal level determined by detector 39.

Further, in the circuits described, control circuit 12 determines whether radio telephone set 2 is installed in base unit 1 by monitoring the voltage ***a*** corresponding to the charging current. However, control circuit 12 may determine whether the radio telephone set 2 is installed by means of a switch on base unit 1 which is operated when the radio telephone set 2 is installed in base unit 1. Furthermore, transmitters 5 and 17 may reduce the transmitting power when radio telephone set 2 is installed in base unit 1 to reduce power consumption. Also, control circuit 22 may send a dialling signal to control circuit 12 through the charging line including terminals 27 and 28 when radio telephone set 2 is installed in base unit 1.

## Claims

1. Radio telephone apparatus comprising a base unit (1) coupled to a wired telephone line (3) and a radio telephone handset (2) including a battery (29), the handset (2) being connected to the base unit through a radio channel, and including speaker means (15) for selectively generating a speech signal from the wired telephone line, the base unit (1) also including loudspeaker means (38) for selectively generating a speech signal from the wired telephone line, the apparatus being characterised by:
(a) determining means (a, 12) for determining if the handset is installed in the base unit; and
(b) control means (12) responsive to the determining means for enabling the base unit loudspeaker means (38) and disabling the handset speaker means (15) if the handset is installed in the base unit and enabling the handset speaker means (15) and disabling the base unit loudspeaker means (38) if the handset (2) is not installed in the base unit (1).

2. Apparatus according to claim 1, characterised in that the determining means comprises means for detecting a flow of charging current supplied from a power source of the base unit (1) to the battery of the handset (2).

3. Apparatus according to claim 1, characterised in that the determining means comprises a switch, located in the base unit (1) and operated by the handset (2) being installed in the base unit (1).

4. Apparatus according to any previous claim characterised by call origination means (32) in the handset (2) for transmitting a call origination signal to the base unit (1) through the radio channel.

5. Apparatus according to any one of claims 1 to 3, characterised by call origination means in the base unit (1).

6. Apparatus according to any preceding claim characterised in that the control means (12) further comprises means for connecting the wired telephone line to the microphone (16) of the handset.

7. Apparatus according to claim 6, characterised by gain control means (37) for adjusting the magnitude of the speech signal generated by the loudspeaker means in response to the magnitude of the speech signal from the microphone (16).

8. Radio telephone apparatus comprising a base unit (1) coupled to a wired telephone line (3) and a portable handset (2) including a battery (29), the portable handset (2) being connected to the base unit through a radio channel, and also including a microphone (16) and speaker means (15) for selectively generating a speech signal from the wired telephone line (3), and the base unit (1) further including loudspeaker means (28) for selectively generating a speech signal from the wired telephone line (3), characterised by:
(a) first determining means (a, 12) for determining if the handset (2) is installed in the base unit (1);
(b) second determining means (12), responsive to an output signal from the first determining means and key data from a predetermined control key (40), for determining a first loudspeaker mode and a second loudspeaker mode, the first loudspeaker mode involving the loudspeaker means (38) alone and the second loudspeaker mode involving the loudspeaker means (38) and also the microphone (16) of the handset; and
(c) control means (12) responsive to the first and second determining means for connecting the loudspeaker means (38) to the wired telephone line (3) if the first loudspeaker mode is determined and connecting said loudspeaker means (38) and said microphone (16) to the wired telephone line (3) if the second loudspeaker mode is determined.

## Patentansprüche

1. Funktelefon, bestehend aus einer Basiseinheit (1) , verbunden mit einer Drahttelefonleitung (3) und einem Funktelefon-Handgerät (2) mit einer Batterie (29), das Handgerät (2) ist mit der Basiseinheit über einen Funkkanal verbunden und schließt einen Lautsprecher (15) für das selektive Erzeugen eines Sprachsignals von der Drahttelefonleitung ein, die Basiseinheit (1) umfaßt weiterhin Lautsprecher (38) für das selektive Erzeugen eines Sprachsignals von der Drahttelefonleitung und die Vorrichtung ist **gekennzeichnet durch:**
(a) Feststellungsmittel (a, 12) zur Feststellung, ob das Handgerät in der Basiseinheit installiert ist und
(b) Steuerungsmittel, die auf die Feststellungsmittel reagieren, zum Einschalten des Lautsprechers (38) der Basiseinheit und Abschalten des Lautsprechers (15) des Handgerätes, wenn das Handgerät in der Basiseinheit installiert ist und zum Einschalten des Lautsprechers (15) des Handgerätes und Abschalten des Lautsprechers (38) der Basiseinheit, wenn das Handgerät (2) nicht in der Basiseinheit (1) installiert ist.

2. Funktelefon nach Anspruch 1, **dadurch gekennzeichnet,** daß die Feststellungsmittel aus Mitteln für das Erkennen eines Ladestromflusses von einer Stromquelle der Basiseinheit (1) zur Batterie des Handgerätes (2) bestehen.

3. Funktelefon nach Anspruch 1, **dadurch gekennzeichnet,** daß die Feststellungsmittel aus einem Schalter bestehen, der in der Basiseinheit (1) angeordnet ist und durch das in der Basiseinheit (1) installierte Handgerät betätigt wird.

4. Funktelefon nach jedem der vorhergehenden Ansprüche, **gekennzeichnet durch** Ruferzeugungsmittel (32) im Handgerät (2) für die Übertragung eines Ruferzeugungssignals zur Basiseinheit (1) über den Funkkanal.

5. Funktelefon nach einem der Ansprüche 1 bis 3, **dadurch gekennzeichnet,** daß die Ruferzeugungsmittel in der Basiseinheit (1) angeordnet sind.

6. Funktelefon nach jedem der vorhergehenden Ansprüche, **dadurch gekennzeichnet,** daß die Steuerungsmittel (12) weiterhin aus Verbindungsmitteln der Drahttelefonleitung mit dem Mikrofon (16) des Handgerätes bestehen.

7. Funktelefon nach Anspruch 6, **gekennzeichnet durch** Mittel für die Verstärkungssteuerung (37) für die Einstellung der Stärke des durch die Lautsprecher erzeugten Sprachsignals in Reaktion auf die Stärke des Sprachsignals vom Mikrofon (16).

8. Funktelefon, bestehend aus einer Basiseinheit (1), verbunden mit einer Drahttelefonleitung (3) und einem tragbaren Handgerät (2) mit einer Batterie (29), wobei das tragbare Handgerät (2) mit der Basiseinheit über einen Funkkanal verbunden ist und weiterhin ein Mikrofon (16) und einen Lautsprecher (15) für das selektive Erzeugen eines Sprachsignals von der Drahttelefonleitung (3) aufweist und die Basiseinheit (1) weiterhin einen Lautsprecher (28) für das selektive Erzeugen eines Sprachsignals von der Drahttelefonleitung (3) aufweist, **gekennzeichnet durch:**
a) erste Feststellungsmittel (a,12) für das Feststellen, ob das Handgerät (2) in der Basiseinheit (1) installiert ist;
(b) zweiten Feststellungsmitteln (12), die auf ein Ausgangssignal von den ersten Feststellungsmitteln und auf Tastendaten von einer vorher festgelegten Steuerungstaste (40) reagieren, für das Feststellen einer ersten und einer zweiten Lautsprecherbetriebsweise, wobei die erste Lautsprecherbetriebsweise den Lautsprecher (38) allein und die zweite Lautsprecherbetriebsweise den Lautsprecher (38) und auch das Mikrofon (16) des Handgerätes mit einschließt und
(c) Steuerungsmittel (12), die auf die ersten und zweiten Feststellungsmittel reagieren, für die Verbindung des Lautsprechers (38) mit der Drahttelefonleitung (3), wenn die erste Lautsprecherbetriebsweise festgestellt wurde und für die Verbindung des Lautsprechers (38) und des Mikrofons (16) mit der Drahttelefonleitung, wenn die zweite Lautsprecherbetriebsweise festgestellt wurde.

## Revendications

1. Appareil téléphonique sans fil qui comprend une unité de base (1) couplé à une ligne téléphonique (3) et un combiné téléphonique (2) comportant une batterie d'alimentation (29), ledit combiné étant connecté à l'unité de base par un canal radio, et incluant des moyens (15) pour engendrer sélectivement un signal vocal ou de parole à partir de la ligne téléphonique, l'unité de base incluant aussi des moyens (38) pour engendrer sélectivement un signal vocal ou de parole à partir de la ligne téléphonique, ledit appareil étant caractérisé par :
a) des moyens (a, 12) pour déterminer si le combiné téléphonique est installé dans l'unité de base ;
b) des moyens de commande (12) qui, en réponse auxdits moyens de détermination, activent le haut-parleur (38) de l'unité de base et désactivent le haut-parleur (15) du combiné lorsque celui-ci est installé dans l'unité de base et qui activent le haut-parleur (15) du combiné et désactivent le haut-parleur (38) de l'unité de base lorsque le combiné (2) n'est pas installé dans l'unité de base (1).

2. Appareil selon la revendication 1, caractérisé en ce que les moyens de détermination en question comprennent des moyens pour détecter la circulation d'un courant de charge fourni par la source d'alimentation électrique de l'unité de base (1) à la batterie du combiné (2).

3. Appareil selon la revendication 1, caractérisé en ce que les moyens de détermination comprennent un commutateur, situé dans l'unité de base (1) et qui est activé par le combiné (2) installé dans l'unité de base (1).

4. Appareil selon l'une quelconque des revendications précédentes, caractérisé par des moyens (32) situés dans le combiné (2) pour émettre un signal d'origine d'appel vers l'unité de base (1) par le canal radio.

5. Appareil selon l'une quelconque des revendications 1 à 3, caractérisé par des moyens d'émission d'appels logés dans l'unité de base.

6. Appareil selon l'une quelconque des revendications précédentes, caractérisé en ce que les moyens de commande comprennent aussi des moyens pour connecter la ligne téléphonique au microphone (16) du combiné.

7. Appareil selon la revendication 6, caractérisé par des moyens de contrôle de gain (37) pour ajuster l'amplitude du signal de parole engendré par le haut-parleur en réponse à celle du signal de parole provenant du microphone (16).

8. Radio-téléphone qui comprend une unité de base (1) reliée à une ligne téléphonique (3) et un combiné portatif (2) incluant une batterie d'alimentation (29), ledit combiné portatif (2) étant relié à l'unité de base par un canal radio, et incluant aussi des moyens acoustiques (15) pour engendrer sélectivement des signaux de parole provenant de la ligne téléphonique (3), l'unité de base (1) incluant, en outre, des moyens (28), tels qu'un haut-parleur, pour engendrer sélectivement un signal vocal ou de parole en provenance de la ligne téléphonique (3), caractérisé en ce qu'il comporte :
a) des premiers moyens (a, 12) pour déterminer si le combiné (2) est installé dans l'unité de base (1) ;
b) des seconds moyens de détermination (12) qui, en réponse à un signal de sortie des premiers moyens de détermination et de données clés provenant d'une clé de contrôle prédéterminée (40), déterminent un premier ou un second mode de haut-parleur, le premier mode de haut-parleur impliquant le haut-parleur (38) seul, tandis que le second mode implique le haut-parleur (38), ainsi que le microphone (16) du combiné ; et
c) des moyens de commande (12) qui, en réponse aux premiers et aux seconds moyens de détermination connectent le haut-parleur (38) à la ligne téléphonique (3) lorsque le premier mode de connexion a été déterminé et qui connectent ledit haut-parleur (38) et ledit microphone (16) à la ligne téléphonique (3) lorsque le second mode a été déterminé.
